Europäisches Patentamt

European Patent Office

Office européen des brevets

(19)

(11) Veröffentlichungsnummer: **0 035 651**
**B1**

(12) **EUROPÄISCHE PATENTSCHRIFT**

(45) Veröffentlichungstag der Patentschrift: **28.08.85**

(21) Anmeldenummer: **81100847.3**

(22) Anmeldetag: **06.02.81**

(51) Int. Cl.⁴: **G 01 B 3/00**, G 01 D 5/26,
G 12 B 17/00

(54) **Wegmesseinrichtung.**

(30) Priorität: **21.02.80 DE 3006489**

(43) Veröffentlichungstag der Anmeldung:
**16.09.81 Patentblatt 81/37**

(45) Bekanntmachung des Hinweises auf die
Patenterteilung:
**28.08.85 Patentblatt 85/35**

(84) Benannte Vertragsstaaten:
**AT CH FR GB IT LI NL SE**

(56) Entgegenhaltungen:
**FR-A-2 015 606**
**FR-A-2 295 403**
**US-A-3 582 211**

(73) Patentinhaber: **Dr. Johannes Heidenhain GmbH**
**Nansenstrasse 17**
**D-8225 Traunreut (DE)**

(72) Erfinder: **Dangschat, Holmer, Dipl.-Ing.**
**Heinz von Stein-Strasse 25**
**D-8225 Traunreut (DE)**

Courier Press, Leamington Spa, England.

EP 0 035 651 B1

**Beschreibung**

Die Erfindung betrifft eine Wegmeßeinrichtung nach dem Oberbegriff des Anspruches 1.

Meßanordnungen mit einem längs einer Meßstrecke beweglichen Bauteil sind z.B. in Form von Laser-Interferometern bekanntgeworden, bei denen das bewegliche Bauteil der Relektor ist. Ferner kann die obige Meßanordnung auch eine Einrichtung zur Feststellung der Abweichung der Bahn eines beweglichen Bauteiles von einer durch ein Laserlichtbündel definierten Geraden sein. Die Meßeinrichtung kann auch in einer Teilmaschine zur Herstellung feinster Gitterteilungen Verwendung finden. Die Meßanordnung kann aber auch ein digitales elektrisches Längenmeßsystem sein, bei dem die Teilung und der dieser vorgelagerte Abtastkopf gegen Umwelteinflüsse abgeschirmt sind. Durch die Abschirmung der Meßstrecke bleiben die Einflüsse während der Messung weitgehend konstant.

Es ist bereits ein Laser-Interferometer bekanntgeworden (DE—A—21 13 477), bei dem der die Meßstrecke umschließende Raum mittels eines Rohres abgeschirmt und evakuiert ist. Das Rohr weist einen Schlitz auf, der mittels biegsamer Dichtlippen, die den Mitnehmer für den optischen Relektor in sich aufnehmen, abgedichtet ist. Nachteilig bei dieser Laser-Interferometeranordnung ist, daß das Vakuum im Meßkanal nur durch ununterbrochene Nachevakuierung mit Vakuumpumpen hoher Leistung aufrechterhalten werden kann.

Es ist weiterhin vorgeschlagen worden (DE—A—24 31 371) bei einer interferometrischen Längenmeßvorrichtung den die Meßstrecke umschließenden geschlitzten Hohlkörper mittels biegsamer, dachförmig angeordneter Dichtlippen zu verschließen. Zur Aufrechterhaltung des Vakuums im Hohlkörper ist dabei der Raum um die Dichtlippen herum mit Vakuumöl ausgefüllt, so daß durch die feinen Leckstellen der biegsamen Dichtlippen nur relativ zähes Öl fließen kann. Gegenüber dem aus der DE—A—21 13 477 bekanntgewordenen Laser-Interferometer bietet die vorgenannte Flüssigkeitsdichtung den Vorteil, daß nur mehr gelegentlich nachevakuiert werden muß. Dies erlaubt auch den Einsatz einer Vakuumpumpe geringer Leistung. Es wird jedoch eine kleine Ölpumpe benötigt, die das Lecköl im Hohlkörper wieder an die Dichtlippen zurückbefördert.

Es ist ferner aus der FR—A—2 295 403 ≙ DE—A—24 60 406 eine Meßeinrichtung der genannten Art bekannt, bei der der Spalt an den Dichtelementen durch eine magnetische Flüssigkeit hermetisch verschlossen ist und die magnetische Flüssigkeit in den Spalten zwischen den Dichtelementen durch ein magnetisches Feld festgehalten wird.

Bei derartig hochgenauen Meßeinrichtungen treten jedoch immer wieder Probleme durch die Festkörperreibung der Dichtelemente am Mitnehmer bei langsamer und schrittweiser Bewegung auf. Selbst die geringsten Kräfte am Mitnehmer können zu einer Beeinflussung der Messung führen, da die Messungen im Wellenlängenbereich des Lichtes erfolgen. Der Mitnehmer überträgt festkörperreibungsabhängige Verbiegungen direkt auf den Meßreflektor, was Verfälschungen des Meßergebnisses zur Folge haben kann.

Darüber hinaus ist es bekannt, Maschinen-Bauteile hydrostatisch zu lagern, und das Abfließen des Drucköles nach außen durch eine pneumatische Druckschwelle zu verhindern (FR—A—2 015 606).

Aufgabe der Erfindung ist es, eine hochgenaue Meßeinrichtung zu schaffen, bei der die Messungen weitestgehend unbeeinflußt von schwankenden Umgebungseinflüssen, Festkörperreibungskräften und Verbiegungen des Mitnehmers stattfinden können.

Erfindungsgemäß wird diese Aufgabe durch die im Kennzeichen des Anspruches 1 angegebenen Maßnahmen gelöst.

Die weitere Ausgestaltung der Erfindung ist durch die in den abhängigen Ansprüchen angegebenen Maßnahmen bestimmt.

Die Vorteile der Erfindung liegen darin, daß Fremdeinflüsse — vor allem durch Reibung — während der Messung nicht wirksam werden und daß Korrekturrechnungen entfallen können.

In der Zeichnung ist ein Ausführungsbeispiel der Erfindung dargestellt.

Es zeigt

Figur 1 schematisch ein Laser-Interferometer, bei dem die Dichtung nach der Erfindung angewandt werden kann,

Figur 2 einen Schnitt nach der Linie II—II,

Figur 3 eine Draufsicht auf einen in Figur 2 geschnitten dargestellten Teil der Meßeinrichtung.

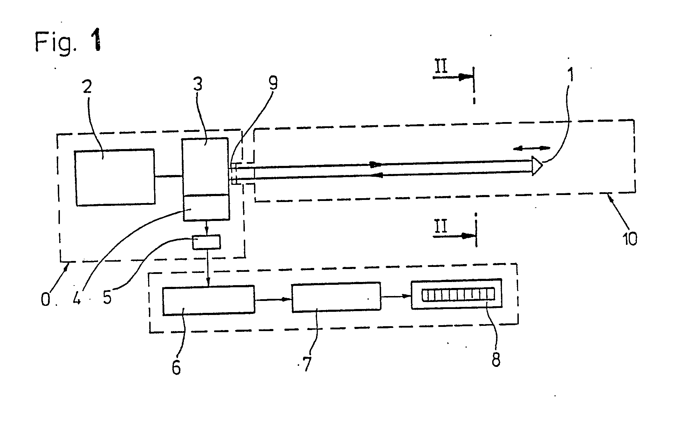

Die Figur 1 zeigt ein Laser-Interferometer bekannter Bauart, bei dem die Erfindung beispielsweise angewandt werden soll. Ein Interferometer O, das am feststehenden Objekt angebracht ist, gestattet im Zusammenwirken mit einem beweglichen Reflektor 1 die Messung von Längen. Die Lichtquelle 2 ist ein Laser. Die Baueinheit 3 enthält eine Interferometeroptik, die den Laserstrahl in einen Meßstrahl und Bezugsstrahl aufspaltet. Die Baueinheit 4 enthält Fotodetektoren, die die optischen Signale in elektrische Signale umformen. In der Baueinheit 5 sind Verstärker und Trigger vorgesehen. Ein elektronischer Vor-/Rückwärtszähler 6 zählt die bei einer Verschiebung des Reflektors 1 durchlaufenden Signalperioden. In einem Rechner 7 erfolgt die Umwandlung der gemessenen Verschiebung in Dezimalwerte, die an einem Anzeigegerät 8 ablesbar sind. Die Meßstrecke bei diesem Interferometer ist ins Vakuum gelegt. Das Laserlichtbündel gelangt über ein Fenster 9 in einen evakuierten Hohlkörper 10. Einzelheiten einer derartigen Interferometeranordnung sind nicht Gegenstand der Erfindung und daher auch nicht näher erläutert.

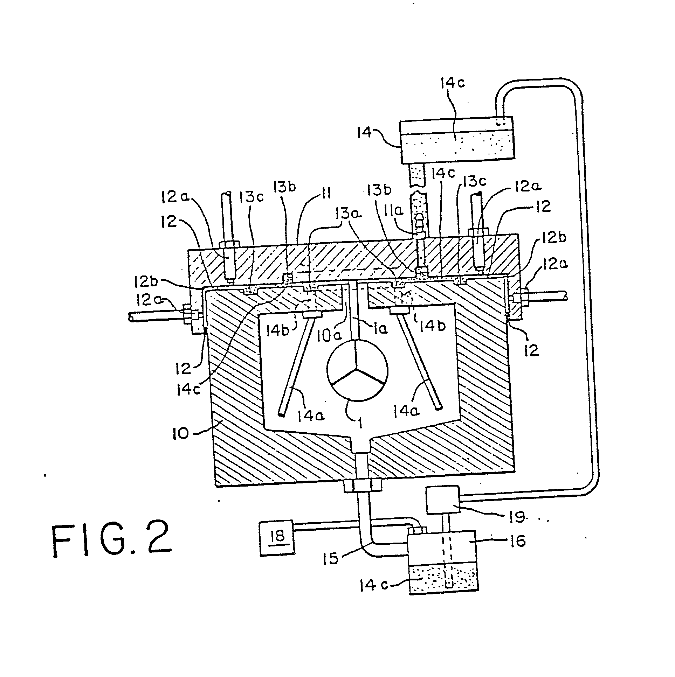

Der in Figur 2 geschnitten dargestellte Teil der Längenmeßeinrichtung verdeutlicht das Prinzip der reibungsfreien Beweglichkeit des Reflektors 1 im evakuierten Hohlkörper 10. Der Reflektor 1 ist mittels Mitnehmer 1 a am beweglichen Bauteil 11 starr befestigt. Der Hohlkörper 10 weist einen Schlitz 10 a auf. Im beweglichen Bauteil 11, das auch als Schlitten bezeichnet wird, sind Düsen 12 a eingebaut, die in bekannter Weise mit einer nicht dargestellten Druckluftquelle verbunden sind. Diese Druckluftquelle speist durch die Düsen 12 a Luft zwischen den Schlitten 11 und den Hohlkörper 10 ein. Durch die eingespeiste Druckluft wird der Schlitten 11 geringfügig vom Hohlkörper 10 abgehoben, so daß ein Luftspalt 12 von etwa 10 μm Dicke entsteht. Das so entstandene Gaslager läßt den Schlitten 11 mit Mitnehmer 1 a und Reflektor 1 praktisch reibungsfrei auf dem Hohlkörper 10 gleiten. Da jedoch der Reflektor 1 nicht nur reibungsfrei, sondern auch unter Ausschaltung schädlicher Umwelteinflüsse, wie Luftdruck-, Temperatur-, Feuchte- und $CO_2$-Gehaltsschwankungen zum Zwecke genauer Messungen bewegt werden soll, muß der den Reflektor 1 umgebende Raum evakuiert sein. Durch die reibungsfreie Lagerung des Schlittens 11 mittels Druckluft und die geforderten Vakuumbedingungen entlang der Meßstrecke ergeben sich äußerst problematische Dichtungsbedingungen, zumal der Mitnehmer 1 a nicht durch berührende Dichtungen beeinflußt werden darf.

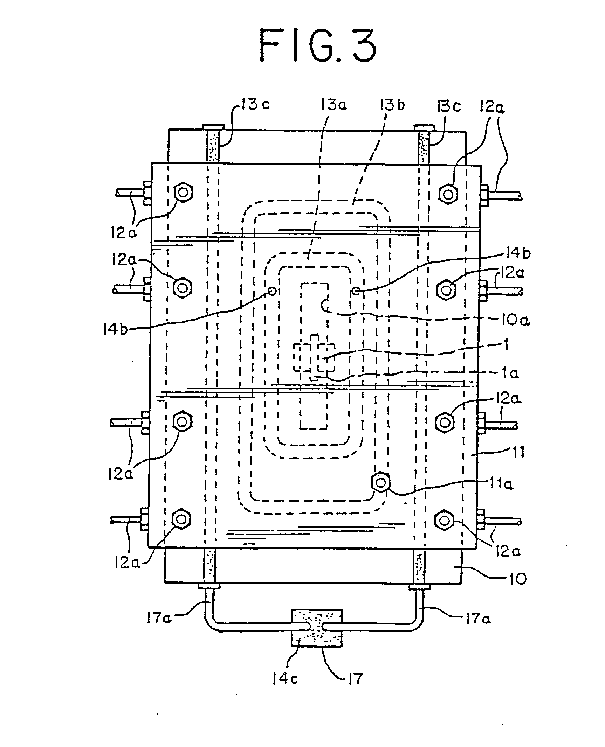

Der Schlitz 10 a ist von einem Ringkanal 13 a umgeben. Am Grund des Ringkanals 13 a befinden sich Auslässe 14b, die in Rohre 14a münden. Die Rohre 14a weisen zum Schutze des Reflektors 1 auf den Grund des Hohlkörperinnenraumes. Ein weiterer Ringkanal 13b befindet sich lagerseitig im Schlitten 11. Wie Figur 3 zeigt, ist die von ihm eingeschlossene Fläche dabei so groß, daß selbst bei maximaler Verschiebung des Schlittens 11 der im Hohlkörper 10 befindliche Ringkanal 13a nicht von dem im Schlitten 11 befindlichen Ringkanal 13b berührt wird. Der Ringkanal 13b ist mit einem Einlaßstutzen 11a an der Oberseite des Schlittens 11 verbunden, über den aus einem hochliegenden Vorratsbehälter 14 Vakuumöl über den Kanal 13b in den Lagerspalt 12 gelangt. Außerhalb des vom Ringkanal 13b überstrichenen Flächenbereiches weist der Hohlkörper 10 zwei parallel verlaufende Kanäle 13c auf, die an einer Stirnseite verschlossen, an der anderen Stirnseite jedoch über Schläuche 17a mit einem Auffangbehälter 17 für Öl 14c verbunden sind. Über den Kanal 13b fließt des Vakuumöl 14c aufgrund der Druckverhältnisse in den Lagerspalt 12. Die Kanäle 13a und 13c begrenzen das Fliessen und verhindern so die Verschmutzung ölempfindlicher Bauteile.

Von der tiefsten Stelle im evakuierten Raum des Hohlprofiles 10 führt ein Abfluß 15 in einen gasdichten Behälter 16. In diesem Behälter 16 bleibt ständig ein Vakuum aufrechterhalten, wozu eine Vakuumpumpe 18 mit geringer Leistung ausreicht.

Öl, das durch die Auslässe 14b und die Rohre 14a auf den Grund des evakuierten Hohlprofiles 10 abgeführt wird, gelangt durch den Abfluß 15 in den Behälter 16. Eine Ölpumpe 19 fördert das Öl 14c aus dem Behälter 16 in den Vorratsbehälter 14 des offenen Systems zurück.

Die Figur 3 stellt eine Draufsicht auf das in Figur 2 geschnitten dargestellte Teil der Längenmeßeinrichtung dar. Der Verlauf und die Ausdehnung des Kanalsystemes 13a, 13b und 13c ist hier verdeutlicht. Die Vielzahl der Lufteinlaßdüsen 12a ist nur angedeutet.

Wie auch aus der Terminologie des Anspruches 1 hervorgeht, ist die reibungsfreie Lagerung nicht auf Gaslager beschränkt, sondern es können auch Flüssigkeitslager Verwendung finden.

## Patentansprüche

1. Wegmeßeinrichtung, mit einem entlang einer Meßstrecke beweglichen, mit einem zu messenden Objekt (1) verbundenen Bauteil (11), bei der der die Meßstrecke unmittelbar umgebende Raum durch einen Hohlkörper (10) gegen Umwelteinflüsse abgeschirmt ist, der zwecks Durchführung eines Mitnehmers für das bewegliche Bauteil (11) in Meßrichtung einen abgedichteten Schlitz (10a) aufweist, dadurch gekennzeichnet, daß zwischen dem Hohlkörper (10) und dem beweglichen Bauteil (11) ein feiner, von Fluidlagern (12a) gebildeter, definierter Lagerspalt (12) vorgesehen ist, und daß für die Abdichtung des Schlitzes (10a) im Hohlkörper (10) eine im Lagerspalt (12) definiert strömende, einen Überdruck gegenüber dem Umgebungsdruck und gegenüber dem Innendruck des Hohlkörpers (10) aufweisende Flüssigkeit (14c) vorgesehen ist.

2. Meßeinrichtung nach Anspruch 1, dadurch gekennzeichnet, daß der Hohlkörper (10) evakuiert ist und einen besonderen Abfluß (15) aufweist.

3. Meßeinrichtung nach Anspruch 1, dadurch gekennzeichnet, daß für die Verteilung der dichtenden Flüssigkeit (14c) ein von einem offenen Versorgungsbehälter (14) gespeistes, dem Schlitz (10a) zugeordnetes Kanalsystem (13a, 13b, 13c) zwischen dem beweglichen Bauteil (11) und dem festen Hohlkörper (10) vorgesehen ist.

## Revendications

1. Dispositif de mesure de trajet, avec un élément de construction (11) mobile le long d'une piste de mesure et reliée à un objet (1) soumis à la mesure, dans lequel l'espace entourant directement la piste de mesure est abrité des influences de l'ambiance par un corps creux qui, pour livrer passage à un organe d'entraînement de l'élément mobile (11), comporte en direction de mesure une fente (10a) rendue étanche, dispositif caractérisé par le fait qu'il existe entre le corps creux (10) et l'élément mobile (11) une fine fente de palier (12) définie, formée par des paliers à fluide (12a) et que, pour assurer l'étanchéité de la fente (10a) du corps creux (10), il est prévu un liquide (14c) s'écoulant de façon définie dans la fente de palier (12) et présentant une surpression par rapport à la pression ambiante et à la pression intérieure du corps creux (10).

2. Dispositif de mesure selon la revendication 1, caractérisé par le fait que le vide est établi dans le corps creux (10) et que ce dernier comporte un écoulement particulier (15).

3. Dispositif de mesure selon la revendication 1, caractérisé par le fait que, pour la distribution du liquide (14c) assurant l'étanchéité, il est établi entre l'élément mobile (11) et le corps creux fixe (10) un système de canaux (13a, 13b, 13c) combiné avec la fente (10a) et alimenté par un réservoir ouvert (14).

**Claims**

1. Path-measuring device, which has a component (11), movable along a measuring zone and connected to an article (1) to be measured, and in which the space immediately surrounding the measuring zone is shielded against environ- mental influences by a hollow body (10) possessing in the measuring direction a sealed-off slot (10a) for the purpose of guiding through an engagement means for the movable component (11), characterised in that between the hollow body (10) and the movable component (11) there is a specific fine bearing gap (12) formed by fluid bearings (12a), and in that a liquid (14c) flowing in a specific way in the bearing gap (12) and being under a pressure higher than the ambient pressure and the internal pressure of the hollow body (10) is provided in the hollow body (10) for sealing off the slot (10a).

2. Measuring device according to Claim 1, characterised in that the hollow body (10) is evacuated and has a special flow-off (15).

3. Measuring device according to Claim 1, characterised in that a channel system (13a, 13b, 13c) fed from an open supply vessel (14) and assigned to the slot (10a) is provided between the movable component (11) and the fixed hollow body (10) for distributing the sealing liquid (14c).

Fig. 1

FIG.2

# FIG.3